# EUROPEAN PATENT SPECIFICATION

(11) **EP 3 323 681 B1**
(45) Date of publication and mention of the grant of the patent: **06.05.2020**
(21) Application number: 17201274.2
(22) Date of filing: 13.11.2017
(51) Int. Cl.: B60R 19/56

(54) **SUPPORTING DEVICE FOR LATERAL PROTECTION ELEMENTS FOR VEHICLES**
STÜTZVORRICHTUNG FÜR SEITLICHE SCHUTZELEMENTE FÜR FAHRZEUGE
DISPOSITIF DE SUPPORT POUR ÉLÉMENTS DE PROTECTION LATÉRAUX POUR VÉHICULES

(30) Priority: 22.11.2016 IT 201600117587
(43) Date of publication of application: 23.05.2018
(73) Proprietor: Takler S.r.l., 70022 Altamura (BA) (IT)
(72) Inventor: LORUSSO, Lorenzo, 70022 Altamura (BA) (IT)
(74) Representative: Santi, Filippo

(56) References cited:
- EP-A2- 1 026 047
- EP-A2- 1 900 575
- FR-A1- 2 807 984

## Description

This invention relates to a supporting device for lateral protective elements for vehicles.

More in detail, this invention relates to a supporting device for lateral protective elements for vehicles on wheels, preferably for industrial vehicles, such as, for example, trucks, trailers, semi-trailers, lorries and the like.

The description below relates to the application of this supporting device to a trailer, but it is quite apparent how the same should not be considered limited to this specific use, as it may also be conveniently extended to other types of vehicles.

Supporting brackets are known for lateral protective bars for trailers of trucks consisting, substantially, of a coupling element with an upturned "U" profile, designed to be fixed on the bottom of the trailer, and of an oblong profile provided with a series of holes to allow the anchoring of the lateral protective bars.

Normally, at least two supporting brackets are fixed on each side of the trailer to guarantee the required stability of the relative lateral protective bars.

This oblong profile is mounted, in a rotatable fashion, on the coupling element in such a way as to be able to move between a vertical lowered position, wherein together with the protective bars it acts as a safety barrier against the intrusion of bicycles or vehicles into the space beneath the trailer, and a raised position, wherein the oblong element is directed towards the outside of the trailer according to a predetermined angle, normally greater than 90°, with respect to the relative vertical position, in such a way as to allow the access, for example, for the performance of possible maintenance activities.

The oblong profile may also be positioned in intermediate angular positions between the lowered position and the raised position.

To allow the rotation of the oblong profile with respect to the coupling element and the locking of the oblong profile in the various positions allowed, there is a plurality of pins positioned transversally to the coupling element.

These types of supporting brackets have, however, various technical limitations and drawbacks, linked mainly to the relative heaviness and to the structural complexity, which determine a certain adverse effect on the manufacturing costs.

These supporting brackets also have a rather limited possibility of movement, which results in a certain inconvenience in use.

The document EP 1 900 575 discloses a supporting device for lateral protective elements for vehicles, in particular for trucks, with the technical features of the preamble of claim 1.

In light of the above, the aim of this invention is therefore to provide a supporting device for lateral protective elements for vehicles which has a simple and basic structure, that is to say, it consists of a limited number of parts.

Another aim of the invention is to provide a supporting device for lateral protective elements for vehicles which is efficient and reliable in use.

Another aim of the invention is to provide a supporting device for lateral protective elements for vehicles which is particularly light.

Another aim of the invention is to provide a supporting device for lateral protective elements for vehicles which has reduced manufacturing costs.

This invention therefore relates specifically to a supporting device for lateral protective elements for vehicles, preferably for trucks, comprising: a base configured for being connected to a vehicle on wheels; at least one mobile element, movable relative to the base and configured for being coupled, in use, to at least one lateral protective element; and connecting means for mutually connecting the base and the at least one mobile element in such a way that the at least one mobile element is able to rotate and translate relative to the base between a lowered position, wherein the at least one mobile element covers laterally, in use, a predetermined space adjacent to the wheels of the vehicle on wheels, and at least one raised position, wherein the at least one mobile element leaves the predetermined space fee laterally; first constraining means for constraining the at least one mobile element in the lowered position; and second constraining means for constraining the at least one mobile element in the at least one raised position.

Preferably, according to the invention, the connecting means comprise at least one first opening and a pin positioned in the at least one first opening.

Advantageously, according to the invention, the at least one first opening may have a substantially rectilinear extension.

Again according to the invention, the at least one first opening may be formed in the at least one mobile element.

Also according to the invention, the first constraining means may comprise at least one hollow portion made of elastic material and at least one protrusion configured for coupling in a removable fashion, in use, with the hollow portion.

Advantageously, according to the invention, the at least one mobile element may comprises, at one end, an elastic element in which is formed the at least one hollow portion, and in that the at least one protrusion may be formed in the base.

Preferably, according to the invention, the second constraining means comprise at least one concave portion formed in the base and at least one protuberance formed in the at least one mobile element and configured for engaging with the concave portion when the at least one mobile element is in the at least one raised position.

Advantageously, according to the invention, in the base may be defined a cavity, in which is at least partially positioned the at least one mobile element, and in that the second constraining means may comprise at least one protrusion protruding towards the cavity in such a way that the at least one mobile element stops when, in use, it abuts against the at least one protrusion.

Again according to the invention, in the base and in the at least mobile element may be respectively formed at least one second opening and at least one third opening, and the supporting device may comprises a safety device for ensuring the locking of the at least one mobile element in the lowered position, the safety device may comprise a pin configured for being inserted in the at least one second opening and in the at least one third opening when the at least one mobile element is in the lowered position.

Advantageously, according to this invention, the base may be formed as one piece.

This invention is now described, by way of example and without limiting the scope of the invention, according to a preferred embodiment, with particular reference to the accompanying drawings, in which:
Figure 1 is an axonometric view of a first configuration of a supporting device for lateral protective elements for vehicles according to this invention;
Figure 2 is a side view of the supporting device of Figure 1;
Figure 3 is a front view of the supporting device of Figures 1 and 2;
Figure 4 is a side view of a second configuration of the supporting device of Figures 1 to 3;
Figure 5 is a perspective view of a detail of Figure 4;
Figure 6 is a side view of a third configuration of the supporting device of Figures 1 to 3, on which the lateral protective bars have been applied;

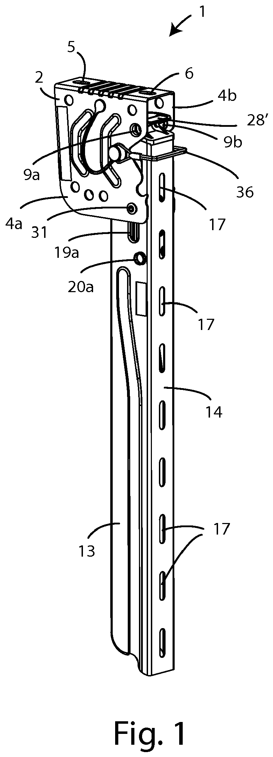

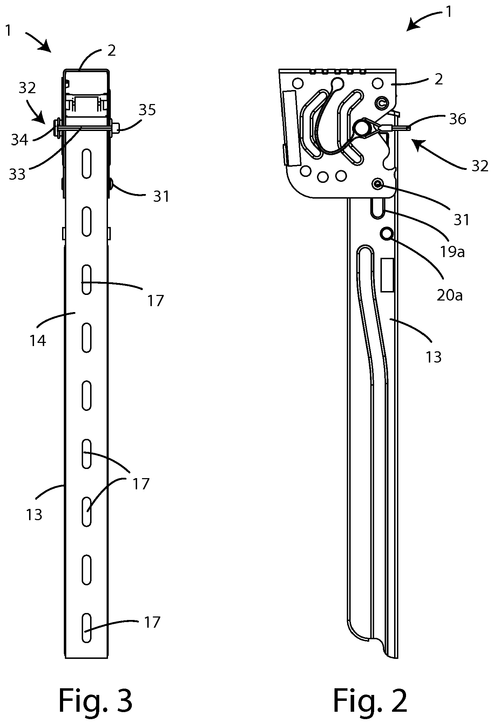

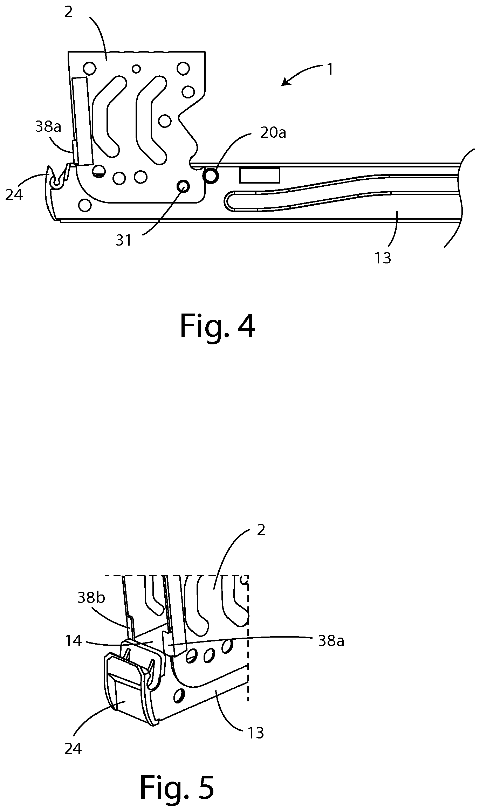

Figure 5 is an axonometric view of a first component of the device shown in Figures 1 to 4;

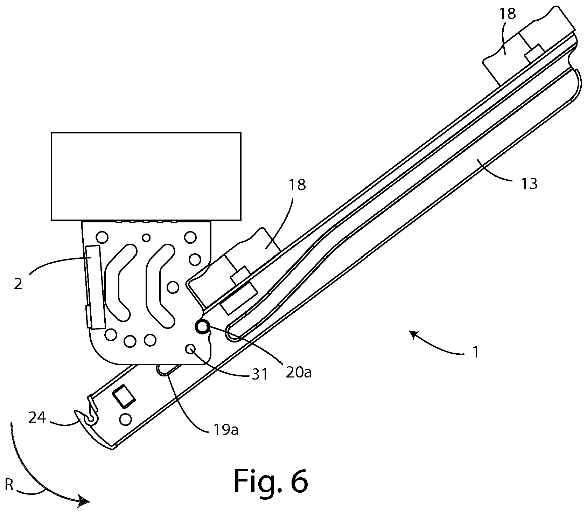

Figure 6 is a cross section view of the component shown in Figure 5;

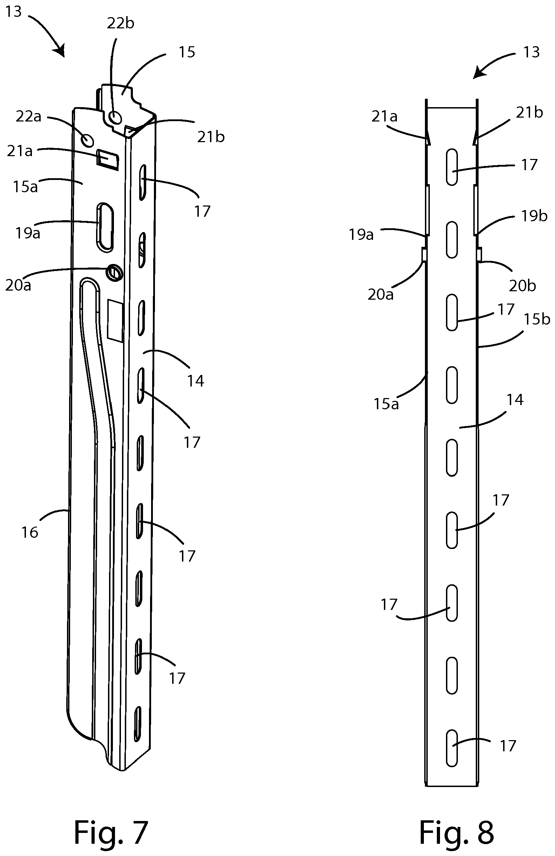

Figure 7 is an axonometric view of a second component of the device shown in Figures 1 to 4;
Figure 8 is a cross section view of the component shown in Figure 7; and

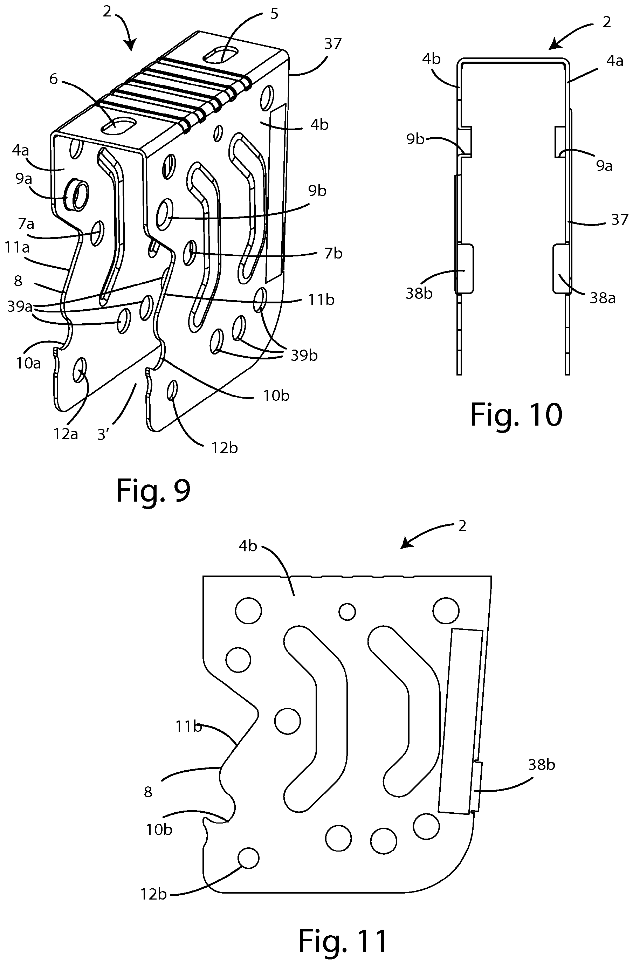

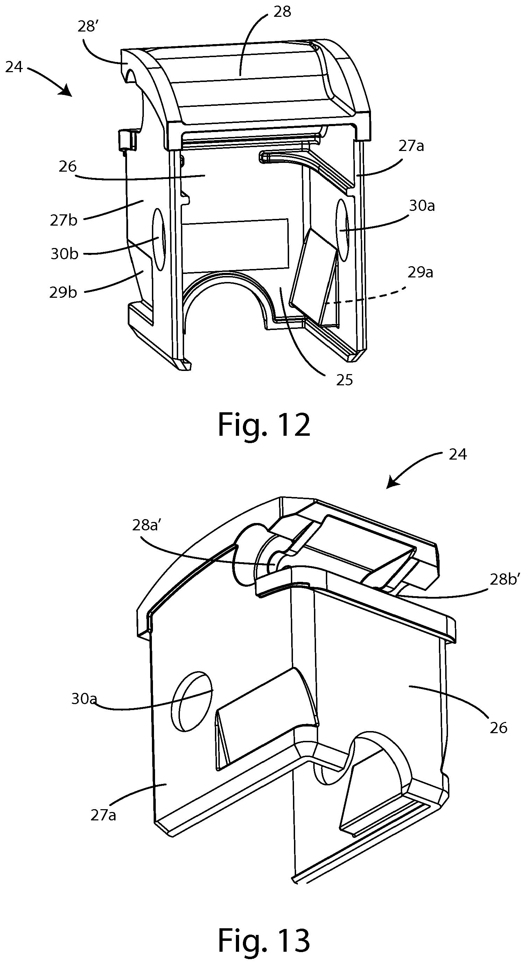

Figure 9 is a side view of the component shown in Figures 7 and 8;
Figure 10 is an axonometric view of a third component of the device shown in Figures 1 to 4; and
Figure 11 is a perspective view of the component shown in Figure 10.

The similar parts in the various drawings are labelled with the same reference numerals.

With reference to the accompanying drawings, the numeral 1 denotes a supporting device for lateral protective elements for vehicles.

The supporting device 1 is particularly suitable for being mounted on the sides of trailers for trucks, in the space between the wheels of the drive vehicle and those of the trailer.

More specifically, the supporting device 1 comprises a supporting element 2, also called "butterfly", having a profile substantially in the shape of an upturned U, that is to say, formed by an upper coupling base 3 from which extend, downwards, a first lateral wing 4a and a second lateral wing 4b parallel to each other, in such a way as to form between them a cavity 3'.

The upper coupling base 3 has two slots 5, 6 to allow the mounting beneath the platform of the trailer, by means of fixing screws or bolts.

On the first lateral wing 4a and on the second lateral wing 4b are formed, respectively, a first hole 7a and a second hole 7b substantially coaxial with each other.

At the front profile 8 of the supporting element 2, above the first hole 7a and the second hole 7b, are formed a first protuberance 9a and a second protuberance 9b which face each other and extend, respectively, from the first lateral wing 4a and from the second lateral wing 4b towards the inside of the supporting device 1.

The portions of the front profile 8 defined in the first lateral wing 4a and in the second lateral wing 4b show, respectively, a first front shape and a second front shape which are substantially identical.

More specifically, the first front shape and the second front shape have a respective first recess 10a, 10b substantially in the form of a hook, provided at the lower part of the relative shape, and a respective second recess 11a, 11b formed above the relative first recess 10a, 10b and having a substantially triangular profile.

In the first lateral wing 4a and in the second lateral wing 4b are also made, respectively, a third hole 12a and a fourth hole 12b, mutually coaxial and formed lower than the relative first recess 10a, 10b.

At a lower region of the first lateral wing 4a and of the second lateral wing 4b there are, respectively, a first trio of holes 39a and a second trio of holes 39b, coaxial with each other in pairs, the purpose of which is described in detail below.

A first tab 38a and a second tab 38b, the purpose of which will be described in detail below, extend from the rear profile 37 of the supporting element 2, opposite the front profile 8, towards the inside of the supporting element 2.

The supporting device 1 also comprises an oblong profile 13, also called "leg", which is box-shaped and mounted, in a rotatable fashion, on the supporting element 2.

The oblong profile 13 has, in particular, a front side 14, a first lateral side 15a, a second lateral side 15b opposite the first lateral side 15a, and a rear side 16 opposite the above-mentioned front side 14.

A row of slots 17 is made on the front side 14 of the oblong profile 13 to allow the fixing of one or more lateral protective bars 18.

A first slot 19a and a second slot 19b are also formed, respectively, at the upper part of the first 15a and of the second lateral side 15b, positioned in front of each other and both having a rectilinear extension according to the main direction of extension of the oblong profile 13.

Beneath the first slot 19a and the second slot 19b are respectively provided, in positions closer to the front side 14, a first annular portion 20a and a second annular portion 20b, protruding, respectively, from the first lateral side 15a and from the second lateral side 15b towards the outside of the oblong profile 13.

Above the first slot 19a and the second slot 19b there are formed, respectively, a first wing 21a and a second wing 21b, facing towards the inside of the oblong profile 13.

In the first lateral side 15a and in the second lateral side 15b of the oblong profile 13 are also made, respectively, a fifth hole 22a and a sixth hole 22b, substantially coaxial to each other, located above the first wing 21a and the second wing 21b in positions closer to the rear side 16 with respect to the latter two.

The supporting device 1 also comprises a sort of cap 24 made of elastic material, to be inserted at the end of the oblong profile 13 designed to couple with the supporting element 2.

The cap 24 has a shape such that it may be inserted, forming a pressure connection, in the oblong profile 13.

More specifically, the cap 24 has an internal cavity 25 defined by a front wall 26, a first lateral wall 27a, a second lateral wall 27b and an upper portion 28.

Above the front wall 26 are also formed a first coupling portion 28a' and a second coupling portion 28b' equal to each other and each with a profile substantially in the shape of a "C" such as to be able to receive, respectively, the above-mentioned first 9a and second protuberance 9b.

More specifically, the first 28a' and second coupling portion 28b' are positioned on the same side of the front side 14 of the oblong profile 13, when the latter is obviously couples with the cap 24.

A first recess 29a and a second recess 29b, substantially shaped to match the first wing 21a and second wing 21b, and provided in positions such as to house the latter two when the cap 24 is inserted in the oblong profile 13 are made, respectively, on the respective side of the first lateral wall 27a and of the second lateral wall 27b facing towards the outside of the cap 24.

A seventh hole 30a and an eight hole 30b, substantially coaxial with each other and provided in positions such as to be also coaxial with the fifth hole 22a and the sixth hole 22b of the oblong profile 13 when the cap 24 is mounted in the oblong profile 13 are also made, respectively, on the first lateral wall 27a and on the second lateral wall 27b of the cap 24.

Both the supporting element 2 and the oblong profile 13, as well as the cap 24, are formed in one piece, without the connection, that is to say, the interconnection between their parts.

The supporting device 1 also comprises a connecting pin 31 passing through the third hole 12a and the fourth hole 12b of the supporting element 2 and through the first slot 19a and the second slot 19b of the oblong profile 13 to allow the mutual coupling, in such a way that the oblong profile 13 may rotate about the connecting pin 31 and also translate thanks to the freedom of movement of the latter inside the first slot 19a and the second slot 19b.

The supporting device 1 also has, optionally, a safety element 32 to ensure that the oblong profile 13 remains in the respective vertical operating position, and with it also the relative lateral protective bars 18.

More specifically, the safety element 32 comprises a central pin 33 with, at the respective ends, a fixed head 34 and a removable head 35 mutually connected also by means of a connecting element 36 passing outside the oblong profile 13.

In order for the safety element 32 to carry out its function of locking the oblong profile 13, the above-mentioned central pin 33 is passed through the first hole 7a and the second hole 7b of the supporting element 2, the fifth hole 22a and the sixth hole 22b of the oblong profile 13 and also through the seventh hole 30a and the eighth hole 30b of the cap 24.

When the supporting device 1 is in the relative operating configuration (see Figures 1 to 3), the oblong profile 13 is oriented vertically downwards, with the connecting pin 31 positioned at the top ends of the first slot 19a and of the second slot 19b and with the first protuberance 9a and the second protuberance 9b of the supporting element 2 coupled, by interference, respectively with the first 28a' and the second coupling portion 28b' of the cap 24.

In this regard, it should be noted that the first 28a' and the second coupling portion 28b' are in fact configured in such a way that in order to perform the uncoupling, from them, of the first 9a and second protuberance 9b, it is necessary to apply a force with an intensity greater than that of the possible stresses which could occur on the oblong profile 13 during the normal operating conditions, that is to say, when the vehicle on which the supporting device 1 is mounted with the relative lateral protective bars 18 is being driven.

When the supporting device 1 is in this configuration, it is possible, optionally, to also use the above-mentioned safety element 32 as a further safety element for guaranteeing the locking of the oblong profile 13; in this case, the relative central pin 33, inserted in the first hole 7a, second hole 7b, fifth hole 22a, sixth hole 22b, seventh hole 30a and eighth hole 30b, will act, precisely, as a locking element between the supporting element 2 and the oblong profile 13 together with the cap 24.

When the supporting device 1 is positioned in this operating configuration, the lateral protective bars 18 coupled with it cover the spaces adjacent to the wheels of the trailer, in such a way as to act as a protective screen against the possible intrusions of bicycles or other vehicles in the space beneath the platform of the trailer.

In order, for any reason, to access the space beneath the trailer when the vehicle is stationary, it is necessary, after clearly removing any safety element 32, where present, from the relative operating position, to exert a rotational force on the oblong profile 13 around the connecting pin 31 according to the arrow R (see Figure 6), with an intensity such as to overcome the retention force exerted by the first 28a' and by the second coupling portion 28b' on the first 9a and on the second protuberance 9b.

Once the first 9a and second protuberance 9b have been uncoupled from the first 28a' and from the second coupling portion 28b', it is possible to rotate the oblong profile 13 until placing it in a first opening position at approximately 90°, shown in Figures 5 and 6, or in a second opening position, preferably at approximately 127° with respect to the relative vertical position and shown in Figure 6.

When the oblong profile 13 is positioned in the first opening position, that is, horizontal, it is kept in position thanks to the contrasting action of the first tab 38a and of the second tab 38b against the front side 14 of the oblong profile 13 (se Figures 4 and 5).

When, however, the oblong profile 13 is in the second opening position, the connecting pin 31 occupies the end opposite to that in which it lies when it is positioned in the vertical operating position, whilst the lateral protective bar 18 closest to the supporting element 2 is in contact with the above-mentioned second recesses 11a, 11b formed in the front profile 8 of the supporting element 2.

Moreover, when the oblong profile 13 is in the second opening position, the first annular portion 20a and the second annular portion 20b protruding of the oblong profile 13 are positioned inside the above-mentioned first recesses 10a, 10b made on the front profile 8 of the supporting element 2, in such a way that the oblong profile 13 is kept in that position thanks to the supporting action performed by the first recesses 10a, 10b of the supporting element 2 on the first annular portion 20a e and on the second annular portion 20b.

If the above-mentioned first 39a and second trio of holes 39b are also provided in the supporting element 2, the oblong profile 13 may be further positioned in intermediate opening positions between the first opening position and the second opening position, that is to say, for example, at 100°, 110° and 120° with respect to the relative vertical position.

In order to maintain the oblong profile 13 in these intermediate positions, use is made of a gudgeon pin, that is, a type of pin (not shown), to be inserted in the first trio of holes 39a and in the second trio of holes 39b and designed to also be in contact with the front side 14 of the oblong profile 13.

As may be easily inferred from the above description, the supporting device 1 according to this invention has a convenient and efficient operation, whilst having a simple and basic structure.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A supporting device (1) for lateral protective elements (18) for vehicles, preferably for trucks, comprising:
a base (2) configured for being connected to a vehicle on wheels, in the base (2) is defined a cavity (3');
at least one mobile element (13, 24), movable relative to the base (2) and configured for being coupled, in use, to at least one lateral protective element (18), the at least one mobile element (13, 24) being at least partially positioned in said cavity (3');
connecting means (19a, 19b, 31) for mutually connecting the base (2) and the at least one mobile element (13, 24) in such a way that the at least one mobile element (13, 24) is able to rotate and translate relative to the base (2) between a lowered position, wherein the at least one mobile element (13, 24) covers laterally, in use, a predetermined space adjacent to the wheels of the vehicle on wheels, and at least one raised position, wherein the at least one mobile element (13, 24) leaves the predetermined space fee laterally;
first constraining means (28a', 28b', 9a, 9b) for constraining the at least one mobile element (13, 24) in the lowered position; and
second constraining means (10a, 10b, 20a, 20b, 38a, 38b) for constraining the at least one mobile element (13, 24) in the at least one raised position;
**characterized in that** the second constraining means comprise at least one protrusion (38a, 38b) protruding towards the cavity (3') in such a way that the at least one mobile element (13, 24) stops when, in use, it abuts against the at least one protrusion (38a, 38b).

2. The supporting device (1) according to claim 1, **characterised in that** the connecting means comprise at least one first opening (19a, 19b) and a pin (31) positioned in the at least one first opening (19a, 19b).

3. The supporting device (1) according to claim 2, **characterised in that** the at least one first opening (19a, 19b) has a substantially rectilinear extension.

4. The supporting device (1) according to claim 2 or 3, **characterised in that** the at least one first opening (19a, 19b) is formed in the at least one mobile element (13, 24).

5. The supporting device (1) according to any one of the preceding claims, **characterised in that** the first constraining means comprise at least one hollow portion (28a', 28b') made of elastic material and at least one protrusion (9a, 9b) configured for coupling in a removable fashion, in use, with the hollow portion (28a', 28b').

6. The supporting device (1) according to claim 5, **characterised in that** the at least one mobile element comprises, at one end, an elastic element (24) in which is formed the at least one hollow portion (28a', 28b'), and **in that** the at least one protrusion (9a, 9b) is formed in the base (2).

7. The supporting device (1) according to any one of the preceding claims, **characterised in that** the second constraining means comprise at least one concave portion (10a, 10b) formed in the base (2) and at least one protuberance (20a, 20b) formed in the at least one mobile element (13, 24) and configured for engaging with the concave portion (10a, 10b) when the at least one mobile element (13, 24) is in the at least one raised position.

8. The supporting device (1) according to any one of the preceding claims, **characterised in that** in the base (2) and in the at least mobile element (13, 24) are respectively formed at least one second opening (7a, 7b) and at least one third opening (22a, 22b), and **in that** the supporting device (1) comprises a safety device (32) for ensuring the locking of the at least one mobile element (13, 24) in the lowered position, the safety device (32) comprising a pin (33) configured for being inserted in the at least one second opening (7a, 7b) and in the at least one third opening (22a, 22b) when the at least one mobile element (13, 24) is in the lowered position.

9. The supporting device (1) according to any one of the preceding claims, **characterised in that** the base (2) is formed as one piece.

## Patentansprüche

1. Stützvorrichtung (1) für seitliche Schutzelemente (18) für Fahrzeuge, bevorzugt Lastwägen, umfassend:
eine Basis (2), die konfiguriert ist, mit einem Fahrzeug auf Rädern verbunden zu sein, wobei in der Basis (2) ein Hohlraum (3') definiert ist;
mindestens ein mobiles Element (13, 24), das relativ zu der Basis (2) beweglich ist und konfiguriert ist, in Verwendung mit mindestens einem seitlichen Schutzelement (18) gekoppelt zu sein, wobei das mindestens eine mobile Element (13, 24) mindestens teilweise in dem Hohlraum (3') positioniert ist;
Verbindungsmittel (19a, 19b, 31) zum gegenseitigen Verbinden der Basis (2) und des mindestens einen mobilen Elements (13, 24) auf solche Weise, dass das mindestens eine mobile Element (13, 24) im Stande ist, sich relativ zu der Basis (2) zu drehen und zwischen einer gesenkten Position, wobei das mindestens eine mobile Element (13, 24) in Verwendung seitlich einen vorgegebenen Raum abdeckt, der an die Räder des Fahrzeugs auf Rädern angrenzt, und mindestens einer angehobenen Position, wobei das mindestens eine mobile Element (13, 24) den vorgegebenen Raum seitlich frei lässt, zu wechseln;
erste Beschränkungsmittel (28a', 28b', 9a, 9b) zum Beschränken des mindestens einen mobilen Elements (13, 24) in der gesenkten Position; und
zweite Beschränkungsmittel (10a, 10b, 20a, 20b, 38a, 38b) zum Beschränkten des mindestens einen mobilen Elements (13, 24) in der mindestens einen angehobenen Position;
**dadurch gekennzeichnet, dass** die zweiten Beschränkungsmittel mindestens einen Fortsatz (38a, 38b) umfassen, der zu dem Hohlraum (3') auf solche Weise vorstehet, dass das mindestens eine mobile Element (13, 24) stoppt, wenn es in Verwendung an dem mindestens einen Fortsatz (38a, 38b) anliegt.

2. Stützvorrichtung (1) nach Anspruch 1, **dadurch gekennzeichnet, dass** die Verbindungsmittel mindestens eine erste Öffnung (19a, 19b) und einen Stift (31), der in der mindestens einen ersten Öffnung (19a, 19b) positioniert ist, umfassen.

3. Stützvorrichtung (1) nach Anspruch 2, **dadurch gekennzeichnet, dass** die mindestens eine erste Öffnung (19a, 19b) eine im Wesentlichen geradlinige Ausweitung aufweist.

4. Stützvorrichtung (1) nach Anspruch 2 oder 3, **dadurch gekennzeichnet, dass** die mindestens eine erste Öffnung (19a, 19b) in dem mindestens einen mobilen Element (13, 24) gebildet ist.

5. Stützvorrichtung (1) nach einem der vorstehenden Ansprüche, **dadurch gekennzeichnet, dass** die ersten Beschränkungsmittel mindestens einen hohlen Abschnitt (28a,', 28b'), der aus elastischem Material hergestellt ist, und mindestens einen Fortsatz (9a, 9b) umfassen, der zur Kopplung auf eine abnehmbare Weise in Verwendung mit dem hohlen Abschnitt (28a', 28b') konfiguriert ist.

6. Stützvorrichtung (1) nach Anspruch 5, **dadurch gekennzeichnet, dass** das mindestens eine mobile Element an einem Ende ein elastisches Element (24) umfasst, in dem der mindestens eine hohle Abschnitt (28a', 28b') gebildet ist und dass der mindestens eine Fortsatz (9a, 9b) in der Basis (2) gebildet ist.

7. Stützvorrichtung (1) nach einem der vorstehenden Ansprüche, **dadurch gekennzeichnet, dass** die zweiten Beschränkungsmittel mindestens einen konkaven Abschnitt (10a, 10b) umfassen, der in der Basis (2) gebildet ist, und mindestens einen Vorsprung (20a, 20b) umfassen, der in dem mindestens einen mobilen Element (13, 24) gebildet ist und zum Eingreifen mit dem konkaven Abschnitt (10a, 10b) konfiguriert ist, wenn das mindestens eine mobile Element (13, 24) in der mindestens einen angehobenen Position ist.

8. Stützvorrichtung (1) nach einem der vorstehenden Ansprüche, **dadurch gekennzeichnet, dass** in der Basis (2) und in dem mindestens mobilen Element (13, 24) jeweils mindestens eine zweite Öffnung (7a, 7b) und mindestens eine dritte Öffnung (22a, 22b) gebildet sind, und dadurch, dass die Stützvorrichtung (1) eine Sicherheitsvorrichtung (32) umfasst, um die Verriegelung des mindestens einen mobilen Elements (13, 24) in der gesenkten Position sicherzustellen, wobei die Sicherheitsvorrichtung (32) einen Stift (33) umfasst, der konfiguriert ist, in die mindestens eine zweite Öffnung (7a, 7b) und die mindestens eine dritte Öffnung (22a, 22b) eingesetzt zu werden, wenn das mindestens eine mobile Element (13, 24) in der gesenkten Position ist.

9. Stützvorrichtung (1) nach einem der vorstehenden Ansprüche, **dadurch gekennzeichnet, dass** die Basis (2) als ein Einzelteil gebildet ist.

## Revendications

1. Dispositif de support (1) pour des éléments protecteurs latéraux (18) pour des véhicules, de préférence pour des camions, comprenant :
une base (2) configurée pour être raccordée à un véhicule sur roues, dans la base (2) est définie une cavité (3') ;
au moins un élément mobile (13, 24), mobile par rapport à la base (2) et configuré pour être accouplé, en utilisation, à au moins un élément protecteur latéral (18), l'au moins un élément mobile (13, 24) étant au moins partiellement positionné dans ladite cavité (3') ;
des moyens de raccordement (19a, 19b, 31) pour le raccordement mutuel de la base (2) et de l'au moins un élément mobile (13, 24) de telle manière que l'au moins un élément mobile (13, 24) soit apte à tourner et translater par rapport à la base (2) entre une position abaissée, dans laquelle l'au moins un élément mobile (13, 24) couvre latéralement, en utilisation, un espace prédéterminé adjacent aux roues du véhicule sur roues, et au moins une position relevée, dans laquelle l'au moins un élément mobile (13, 24) laisse l'espace prédéterminé libre latéralement ;
des premiers moyens de contrainte (28a', 28b', 9a, 9b) pour la contrainte de l'au moins un élément mobile (13, 24) dans la position abaissée ; et
des seconds moyens de contrainte (10a, 10b, 20a, 20b, 38a, 38b) pour la contrainte de l'au moins un élément mobile (13, 24) dans l'au moins une position relevée ;
**caractérisé en ce que** les seconds moyens de contrainte comprennent au moins une saillie (38a, 38b) faisant saillie vers la cavité (3') de telle manière que l'au moins un élément mobile (13, 24) s'arrête lorsqu'en utilisation, il bute contre l'au moins une saillie (38a, 38b).

2. Dispositif de support (1) selon la revendication 1, **caractérisé en ce que** les moyens de raccordement comprennent au moins une première ouverture (19a, 19b) et une broche (31) positionnée dans l'au moins une première ouverture (19a, 19b).

3. Dispositif de support (1) selon la revendication 2, **caractérisé en ce que** l'au moins une première ouverture (19a, 19b) présente une extension sensiblement rectiligne.

4. Dispositif de support (1) selon la revendication 2 ou 3, **caractérisé en ce que** l'au moins une première ouverture (19a, 19b) est formée dans l'au moins un élément mobile (13, 24).

5. Dispositif de support (1) selon l'une quelconque des revendications précédentes, **caractérisé en ce que** les premiers moyens de contrainte comprennent au moins une portion creuse (28a', 28b') réalisée en matériau élastique et au moins une saillie (9a, 9b) configurée pour l'accouplement de manière amovible, en utilisation, avec la portion creuse (28a', 28b').

6. Dispositif de support (1) selon la revendication 5, **caractérisé en ce que** l'au moins un élément mobile comprend, à une extrémité, un élément élastique (24) dans lequel est formée l'au moins une portion creuse (28a', 28b') et **en ce que** l'au moins une saillie (9a, 9b) est formée dans la base (2).

7. Dispositif de support (1) selon l'une quelconque des revendications précédentes, **caractérisé en ce que** les seconds moyens de contrainte comprennent au moins une portion concave (10a, 10b) formée dans la base (2) et au moins une protubérance (20a, 20b) formée dans l'au moins un élément mobile (13, 24) et configurée pour la mise en prise avec la portion concave (10a, 10b) lorsque l'au moins un élément mobile (13, 24) est dans l'au moins une position relevée.

8. Dispositif de support (1) selon l'une quelconque des revendications précédentes, **caractérisé en ce que** dans la base (2) et dans l'élément au moins mobile (13, 24) sont respectivement formées au moins une deuxième ouverture (7a, 7b) et au moins un troisième ouverture (22a, 22b), et **en ce que** le dispositif de support (1) comprend un dispositif de sécurité (32) pour s'assurer du verrouillage de l'au moins un élément mobile (13, 24) dans la position abaissée, le dispositif de sécurité (32) comprenant une broche (33) configurée pour être insérée dans l'au moins une deuxième ouverture (7a, 7b) et dans l'au moins une troisième ouverture (22a, 22b) lorsque l'au moins un élément mobile (13, 24) est dans la position abaissée.

9. Dispositif de support (1) selon l'une quelconque des revendications précédentes, **caractérisé en ce que** la base (2) est formée comme une pièce.
